(19) **Europäisches Patentamt**

**European Patent Office**

**Office européen des brevets**

(11) **EP 1 644 698 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **04738660.2**

(22) Anmeldetag: **14.06.2004**

(51) Int Cl.:
***G01B 11/06*** (2006.01)

(86) Internationale Anmeldenummer:
**PCT/DE2004/001208**

(87) Internationale Veröffentlichungsnummer:
**WO 2004/113828 (29.12.2004 Gazette 2004/53)**

(54) **INTERFEROMETRISCHES VERFAHREN ZUR MESSUNG VON EBENENABSTÄNDEN MIT SUBNANOMETER-GENAUIGKEIT**

INTERFEROMETRIC METHOD FOR THE MEASUREMENT OF PLANE SEPARATIONS WITH SUB-NANOMETRE ACCURACY

PROCEDE DE MESURE PAR INTERFEROMETRIE DE DISTANCES ENTRE DES PLANS AVEC UNE PRECISION SUBNANOMETRIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.06.2003 DE 10328412**

(43) Veröffentlichungstag der Anmeldung:
**12.04.2006 Patentblatt 2006/15**

(73) Patentinhaber: **Universität zu Lübeck**
**23538 Lübeck (DE)**

(72) Erfinder:
• **KOCH, Edmund**
**01309 Dresden (DE)**
• **KOCH, Peter**
**23558 Luebeck (DE)**

(74) Vertreter: **Biehl, Christian**
**Boehmert & Boehmert,**
**Anwaltssozietät,**
**Niemannsweg 133**
**24105 Kiel (DE)**

(56) Entgegenhaltungen:
WO-A-02/082008          DE-A- 4 309 056
US-A- 4 293 224          US-A- 5 619 329

**Beschreibung**

Die Erfindung betrifft ein Verfahren und eine Vorrichtung zur kontaktlosen Bestimmung des Abstandes wenigstens einer in oder auf einer Probe befindlichen teilreflektierenden Ebene zu einer vorab gewählten ebenfalls teilreflektierenden Referenzebene der Probe durch Beleuchtung der Probe mit breitbandigem Licht und Auswertung einer Interferenzerscheinung.

Typische Reflektorebenen im Sinne der Erfindung sind Grenzflächen zwischen Medien unterschiedlicher Brechzahl. Typische Referenzebenen im Sinne der Erfindung sind glatte Flächen hoher Reflektivität insbesondere an der Grenzfläche Luft-Probe, d.h. Probenoberflächen. Unter glatten Flächen sind solche zu verstehen, deren Oberflächenrauhigkeit (= Varianz der z-Komponenten der Flächenelemente, sog. Pixel) sehr klein gegen die Beleuchtungslichtwellenlängen ist. Insbesondere sollen glatte Flächen als ideale Spiegel angesehen werden, die keine Speckle-Muster erzeugen.

In mehreren Bereichen der Nanotechnologie werden Schichten aus wenigen Moleküllagen auf Trägersubstanzen aufgebracht. Die Kontrolle der Qualität dieser Schichten erfolgt in der Regel optisch über Weisslichtinterferometrie, Ellipsometrie oder Oberflächenplasmonen-Resonanzspektroskopie. Eine weitere Möglichkeit besteht darin fluoreszierende Sekundärreagenzien aufzubringen, die selektiv an die Beschichtung binden, um anschließend fluoreszenzmikroskopisch die Belegung der Oberfläche zu untersuchen. Für exakte Messungen mit sowohl hoher lateraler als auch axialer Auflösung werden konfokale mikroskopische Systeme oder auch Rastersondenverfahren wie z.B. die Rasterkraftmikroskopie eingesetzt. Allen Verfahren gemein sind der erhebliche technische Aufwand und - bei hoher lateraler Auflösung - der große Zeitbedarf pro Scan, was eine ständige Qualitätskontrolle meist nicht möglich macht.

Anwendungsbereiche für die Messung molekularer Schichten findet man u. a. in der Medizin und Biotechnik. Beispielsweise bei der Beschichtung von DNA- oder Proteinchips werden Oligonukleotide bzw. Antikörper auf einer Fläche in der Regel geometrisch angeordnet: z.B. als Punktraster entlang einer mikrofluidischen Kanalbegrenzung. Für eine quantitative Auswertung ist eine gleichmäßige, möglichst dichte mittlere Belegung gewünscht, die so locker ist, dass sich die Zielstrukturen gegenseitig nicht behindern. Es soll vor allem festgestellt werden, ob sich Aggregate auf der Oberfläche gebildet haben, die in der Regel unerwünscht sind. Nachgewiesen werden sollen geometrische Schichtdicken von ca. 5 -10 nm.

Weitere Anwendungsfelder für Profilometer mit Nanometergenauigkeit liegen in der Fertigung von Halbleiter-Produkten, polierten Materialien, Optiken, magnetischen Speichermedien sowie für Lithographie- und Mikrostrukturen. Generell kommen alle industriellen Prozesse der Oberflächenbehandlung von Werkstoffen in Frage, bei denen über relativ ausgedehnte Flächen sehr geringe Schichtdickenunterschiede bestimmt werden müssen. In solchen Fällen ist insbesondere Rastersondenmikroskopie uneffektiv und zu teuer.

Optische Profilometer, die die Oberflächenstruktur einer Probe kontaktlos abtasten, sind Stand der Technik in zahlreichen Variationen. Die typischen Verfahren sind die so genannte Phasenverschiebungs- und die Weißlichtinterferometrie.

Bei der Phasenverschiebungs-Interferometrie (PI) wird kohärentes Licht mittels eines Strahlteilers in den Referenz- und Probenarm eines Interferometers gelenkt. Der Referenzspiegel ist entlang des Referenzarms beweglich angeordnet, so dass die Länge des Referenzarms, bevorzugt in gleichmäßiger Weise, veränderlich ist. Durch periodisches Verstellen des Spiegels wird das Referenzlicht phasenmoduliert. Das von der Probenoberfläche reflektierte Licht wird mit dem phasenmodulierten Referenzlicht überlagert und es entsteht ein zeitlich veränderliches Interferogramm auf einer Detektionsvorrichtung. Dessen Auswertung erlaubt die Positionsbestimmung des lokalen Probenspiegels, d.h. des während eines lateralen Probenscans beleuchteten Oberflächenbereichs, mit hoher Genauigkeit (wenige Nanometer) relativ zu einer festen Bezugsebene. Überschreitet jedoch die Variation der Oberfläche zur Bezugsebene die Hälfte der Lichtwellenlänge, treten Uneindeutigkeiten der Positionsbestimmung auf, da $2\pi$-moduliertes Probenlicht dann auf dieselben Interferogramme führt ("$2\pi$ ambiguity"). Ähnliche Schwierigkeiten ergeben sich bei rauen Oberflächen, wo das Probenlicht eine statistisch verteilte Phase aufweist. Die EP 0498 541 A1 greift diesen Nachteil auf und schlägt zur Verbesserung das gleichzeitige Messen mit wenigstens zwei verschiedenen Wellenlänge vor. Hauptnachteil der PI bleibt aber der komplexe apparative Aufbau, der insbesondere stets Laserlichtquellen und Phasenmodulatoren für das Referenzlicht umfasst.

Speziell für die Vermessung rauer Oberflächen wird oft auf die Weisslichtinterferometrie (WLI) zurückgegriffen. Die Patentschrift DE 41 08 944 C2 beschreibt beispielsweise ein dem Michelson-Aufbau nachempfundenes Interferometer, bei dem kurzkohärentes Licht aus einer Glühlampe oder Superlumineszenzdiode in einen Referenz- und Probenarm gelenkt wird, wobei Referenzspiegel und Probe beweglich gelagert sind. Unter der Bedingung, dass die Kohärenzlänge des Lichts nicht kleiner als die Rautiefe der Oberfläche gewählt wird, zeigen sich Speckles, deren jeweilige Intensität bei Verschiebung des Spiegels (oder der Probe) entlang der Strahlrichtung variiert. Hieraus lässt sich das Oberflächenprofil im beleuchteten Bereich der Probe mit heute typischer Genauigkeit um 100 nm bestimmen. Dies ist zwar gering im Vergleich zur PI, allerdings sind keine Laserlichtquellen erforderlich und das $2\pi$-Problem tritt nicht auf.

Die Druckschrift US 5 953 124 stellt eine Kombination von PI und WLI vor, bei der mit kurzkohärentem Licht zeitabhängige 2D-Interferogramme auf Detektorebenen erzeugt und ausgewertet werden.

Eine Abwandlung der WLI ist in der Druckschrift DE 692 27 902 T2 dargelegt. Wenn die Probe das Sondierlicht teilweise durchlässt und in verschiedenen Tiefenebenen zurückstreut, so kann bei kleiner Apertur der Probenbeleuchtung und durch Ausblenden der mit seitlichem Versatz gestreuten Lichtanteile ein punktueller Tiefenscan der Probe erzielt werden. Dieses Messverfahren wird als "Optical Coherence Tomography" (OCT) bezeichnet, wobei die Tiefenbestimmung der Streuzentren bei kurzer Kohärenzlänge des Lichts durch die Kenntnis der zeitlich veränderlichen Länge des Referenzarmes erfolgt. Typische Scantiefen heutiger OCT-Systeme betragen bis zu 2 mm bei einer vertikalen Auflösung um 10 μm. Gängige Anwendungsgebiete sind die *in vivo* Untersuchung biologischer Proben und Gewebe, insbesondere der Augenretina.

Die Druckschrift US 6 359 692 B1 beschreibt ein Profilometer mit Phasenmodulator und durchstimmbarer Lichtquelle zur Untersuchung von Proben, bei denen mehrere Reflektorebenen gleichzeitig zur Interferenz beitragen. Zielsetzung ist hier in erster Linie das Ausblenden von Störeinflüssen der zusätzlichen Reflektoren auf das Interferenzmuster.

Allen soweit genannten Verfahren ist gemein, dass sie bewegliche Teile zur Beeinflussung der Lichtwege enthalten, wobei Referenz- und Messarm der Interferometer stets unterschiedlich behandelt werden. Typischerweise werden Mess- und Referenzstrahl dabei in LichtleiterFasern geführt, die aber niemals identischen Umgebungsbedingungen ausgesetzt sind, so dass dieser Unterschied bereits zu unkontrollierten Abweichungen zwischen den Wegen führt. Jegliche Faserbewegung führt überdies ungewollt zu Längenänderungen im μm-Bereich.

Aus der Druckschrift WO 02/084263 ist ein in dieser Hinsicht verbessertes OCT-System bekannt, das ohne bewegte Teile auskommt. Das tiefenaufgelöste Streuvermögen der Probe wird über die Laufzeitverteilung des rückgestreuten Lichts aus einem Interferogramm auf einer Photodiodenzeile errechnet, das sich durch eine dem klassischen Doppelspalt-Experiment nachempfundenen Anordnung erzeugen lässt. Auf den Referenzarm des Interferometers wird verzichtet, stattdessen wird der Referenzspiegel in den Probenarm verlegt. Die Referenz kann z.B. durch reflektiertes oder rückgestreutes Licht von der Probenoberfläche gegeben sein. Referenz- und Probenlicht werden über eine gemeinsame Faser in die Analyseeinheit geführt und dort überlagert. Störungen durch Umwelt- und Bewegungseinflüsse werden so minimiert.

Ein zur OCT alternatives tomographisches Verfahren geht aus der DE 43 09 056 A1 hervor und wird gemeinhin als "Spektralradar" bezeichnet. Dabei wird Licht aus einer breitbandigen Lichtquelle in der Probe in einer Ebene mit Abstand z zu einer Referenzebene (z=0) gestreut und mit rückgestreutem Licht aus der Referenzebene überlagert. Es kommt so zu konstruktiver oder destruktiver Interferenz für einen beliebigen, festen Abstand z der Ebenen je nachdem, welche der eingestrahlten Wellenlängen $\lambda$ man betrachtet. Sind eine Mehrzahl von Ebenen mit Abständen aus einem Intervall [z1, z2] zur Referenzebene an der Rückstreuung beteiligt, so ist die Ausgangsintensität I($\lambda$) als Integral über dieses Intervall aufzufassen. Bei Verwendung breitbandigen Lichts, z.B. aus einer Superlumineszenzdiode, wird das Interferenzlicht spektral zerlegt und üblicherweise auf eine Photodiodenzeile oder eine vergleichbare Vorrichtung abgebildet. Dies erlaubt das Messen der Verteilung I(k), k=2$\pi$/$\lambda$ als räumliche Verteilung auf der Sensorzeile. Eine Fouriertransformation dieser Verteilung führt auf das tiefenabhängige Streuvermögen S(z). Auch dieses Verfahren besitzt einen relativ einfachen apparativen Aufbau, der ohne bewegte Elemente auskommt.

Die letztgenannten Tomographie-Verfahren ohne bewegte Komponenten (sog. "NoMotion") wurden bislang nie zur hochgenauen Profilierung in Betracht gezogen, weil dazu auf Phaseninformationen nicht verzichtet werden kann. Diese Informationen sind jedoch auch bei den NoMotion-Messungen vorhanden und lassen bei geeigneter Auswertung der Messungen Rückschlüsse auf Reflektorabstände sogar im Subnanometer-Bereich zu.

Insbesondere sind zudem die eine Spektralzerlegung an zwei Punkten und nur die Modulationsfrequenzen zur Differenzbildung heranziehende US-A-5.619.329 und die US-A-4.293.224 zu nennen, in der jedoch nur eine Abstandbestimmung anhand von einer Interferenzmnessung an einem Punkt, aber ohne Spektralzerlegung beschrieben ist, ähnlich wie in der DE 43 09 056 A, die zudem noch ohne Phasenlage an einem Punkt, wenn auch mit Spektralzerlegung arbeitet.

Es ist die Aufgabe der Erfindung, ein interferometrisches Verfahren und ein Interferometer zur hochgenauen Profilierung einer oder mehrerer Reflektorebenen auf oder in einer Probe bereitzustellen, wobei der Referenzarm des Interferometers in der dem Stand der Technik bekannten Weise mit dem Probenarm zusammenfällt, so dass sich die Verwendung von Phasenmodulatoren, insbesondere mechanisch bewegter Teile, erübrigt.

Die Aufgabe wird gelöst durch ein Verfahren mit den Merkmalen des Anspruches 1. Die Unteransprüche geben vorteilhafte Ausgestaltungen des Verfahrens an. Die Erfindung wird im folgenden näher erläutert. Dabei wird diskutiert:

- eine typische Lichtintensitätsverteilung, wie sie durch Interferenz von breitbandigem Licht an zwei fest beabstandeten Reflektorebenen entsteht, wenn das Licht spektral zerlegt und z.B. auf einer Sensorzeile detektiert wird;

- die Beträge der Fourierkoeffizienten der Verteilung aus dieser;

- die Ergebnisse einer numerisch simulierten Messung des Abstandes der Reflektorebenen zum Vergleich des hier beschriebenen Verfahrens mit dem Stand der Technik.

Aus einer breitbandigen Lichtquelle, vorzugsweise einer Superlumineszenzdiode, wird die Probe beleuchtet. Es wird vorausgesetzt, dass die Probe mindestens eine gut reflektierende Ebene enthält, die sich als glatte Referenzebene eignet. Zumeist wird dies die - ggf. vorbehandelte - Probenoberfläche sein. Das Beleuchtungslicht wird nun an der Referenzebene und an wenigstens einer weiteren interessierenden Ebene, z.B. der Oberfläche einer molekularen Schicht, reflektiert.

Dabei ist beim hier beschriebenen Verfahren zu beachten, dass die beiden Ebenen einen Mindestabstand haben müssen, der vorzugsweise mehr als 20 $\mu$m betragen sollte. Wenn es darum geht, die Dicke einer Beschichtung auf einem Substrat zu untersuchen, eignet sich ggf. nicht die Substratoberfläche direkt unter der Beschichtung. Ist das Substrat für das Messlicht jedoch ausreichend transparent, so bietet die Substratrückseite üblicherweise eine ausreichend weit entfernte, hoch reflektierende Referenzebene. Dies ist beispielsweise für sichtbares Licht und Glasscheibe oder Infrarotlicht ($\lambda \approx 1,3$ $\mu$m) und Siliziumwafer der Fall.

Zu den Vorteilen des Verfahrens zählt ferner, dass auch eine Mehrzahl von Ebenen gleichzeitig untersucht werden kann, sofern deren Abstände zur Referenz als auch vorzugsweise zueinander deutlich unterschiedlich sind. Dies ist interessant bei der Kontrolle geschichteter Proben, etwa für Heterokristalle. Zur Vereinfachung wird im Folgenden nur der Fall genau eines gesuchten Abstandes d zwischen zwei Ebenen diskutiert.

Durch die Überlagerung der elektromagnetischen Wellen von Referenz- und Messoberfläche ergibt sich durch Interferenz ein Gesamtsignal $I_G$ am Detektor:

$$(1) \quad I_G = I_R + I_M + 2\sqrt{I_R \cdot I_M} \cdot \cos\left(2\pi \frac{2nd}{\lambda} + \varphi_0\right)$$

wobei $I_R$ und $I_M$ die Intensitäten von Referenz- bzw. Messoberfläche sind, n den Brechungsindex im Bereich zwischen den Ebenen und $\lambda$ die Wellenlänge bezeichnet (siehe Bergmann-Schäfer: Optik, 9. Auflage, S. 304). Haben die beiden reflektierten Wellen unterschiedliche Phase (unterschiedliche Phasen können sich ergeben durch das Vorzeichen des Brechzahlübergangs bzw. bei Medien mit komplexem Brechungsindex, wie etwa Metallen) kommt noch eine zusätzliche Phase $\varphi_0$ hinzu, die im allgemeinen nicht stark von der Wellenlänge abhängt, in einem begrenzten Spektralbereich deshalb als konstant angenommen wird. Diese Formel gilt für Zweistrahlinterferenz, also zum Beispiel im Michelson-Interferometer, ist aber auch eine gute Näherung im Fall von Vielstrahlinterferenz, wie sie in einem Etalon auftritt, sofern das Reflexionsvermögen beider Oberflächen klein ist (siehe Bergmann-Schäfer: Optik, 9. Auflage, S. 338). Die Intensitäten $I_R$ und $I_M$ sind bei den breitbandigen Lichtquellen nur schwach von der Wellenlänge abhängig. Durch eine Hochpass-Filterung wird zur Analyse nur der stark wellenlängenabhängige Interferenzterm aus Gleichung (1) verwendet. Dieser wird im Weiteren mit $I_W$ bezeichnet. Als Funktion der Wellenzahl $\nu = 1/\lambda$ ergibt sich dieses Wechselsignal zu:

$$(2) \quad I_W = 2\sqrt{I_R \cdot I_M} \cdot \cos(2\pi \cdot 2nd\,\nu + \varphi_0)$$

Das Interferenzsignal ist eine amplitudenmodulierte, bezüglich $\nu$ periodische Funktion, die nur in einem kleinen Spektralbereich vorliegt, der durch das Spektrometer und die Lichtquelle begrenzt wird (siehe Darstellungen der DE 103 28 412 A1 als Beispiel). Die übliche Auswertung unterzieht das gegen $\nu$ aufgetragene Wechselsignal $I_W$ einer Fouriertransformation, bestimmt die Ortsfrequenz mit dem größten Signal und identifiziert diese mit der gesuchten Größe nd. Vorausgesetzt, die Brechzahl n ist hinreichend genau bekannt und im benutzten Spektralbereich in guter Näherung konstant, so ist das Problem der Bestimmung von d im Prinzip gelöst.

Aber da das Signal in der Regel nur an einigen (z.B. 1024) diskreten Stützpunkten erfasst wird, wird es einer diskreten (schnellen) Fourieranalyse (FFT) unterzogen, und man verwendet die dem Betrage nach größte Fourierkomponente (Peak). Ist der zur Analyse benutzte Spektralbereich $\Delta\nu$, so erhält man den Term 2nd in Einheiten von $1/\Delta\nu$, also nur eine Approximation an den wahren Wert. Beispielsweise für den Spektralbereich von 800-860 nm beträgt $\Delta\nu$ = 87 mm$^{-1}$. Dann ist der Kanalabstand der Fouriertransformierten $1/\Delta\nu$ = 11.5 $\mu$m, d.h. der mit FFT berechnete Wert für nd besitzt eine Unsicherheit von ca. 6 $\mu$m, was mit gängigen profilometrischen Auflösungen nicht konkurrieren kann.

Zur Abhilfe wird deshalb zwischen den diskreten Punkten der Fouriertransformierten interpoliert. Dies kann z.B. durch einfache Parabelinterpolation in der Umgebung des Peaks erfolgen. Zwischenwerte bekommt man aber auch durch das bekannte Verfahren des Zerofillings, das jedoch den Zeitaufwand für die Fouriertransformation vergrößert. Details des Ergebnisses der Interpolation sind abhängig von der Hüllkurve des Signals. Entspricht die Hüllkurve des Signals einem Cosinus (Hanning-Fenster), so ergibt sich eine sehr gute Bestimmung der Lage des Maximums, wenn man für die Parabelinterpolation die drei Amplituden um das Maximum verwendet und diese Amplituden vorher der Operation $x^{0,23}$ unterzieht. Hier sind aber auch viele andere Arten der Auswertung möglich.

Ist die Amplitude der Fouriertransformierten in der Umgebung des Peaks aufgetragen, macht es offenbar kaum Sinn, weitere Punkte außer der Peakumgebung in die Auswertung einzubeziehen, da die darin enthaltene Information aufgrund des immer präsenten Rauschens wenig Gewinn bringt. Letztendlich wird die Genauigkeit der Frequenzbestimmung durch das Signal/Rausch-Verhältnis der Eingangsdaten bestimmt. Diese bestimmen das Signal/Rausch-Verhältnis (S/N) der Amplituden, die zur Auswertung verwendet werden. Da diese Amplituden kaum stärker als linear in die Auswertung eingehen, der maximale Einfluss der Amplituden aber gerade einen Kanal beträgt, ist die Genauigkeit der Dickenbestimmung auf einen Wert in der Größenordnung Kanalabstand dividiert durch S/N bestimmt. In Zahlen bedeutet dies, für ein S/N von 1000 oder 60 dB und den oben genannten Spektralbereich lässt sich der Wert nd auf ca. 6 nm genau bestimmen. Dies ist zwar schon deutlich kleiner als die Wellenlänge des Lichts, reicht für einige Anwendungen jedoch noch nicht aus.

Eine Änderung der Schichtdicke um $\Delta$nd ≈ $\lambda$/4 (ca. 210 nm, wenn alle benutzten Wellenlängen aus dem Fenster 800-860 nm stammen) führt im Spektrogramm auf eine geringfügige Änderung der Ortsfrequenz, die sich bei Fouriertransformation in einer ebenfalls geringfügigen Lageänderung der größten Fourierkomponente bemerkbar macht. Dabei wechselt der Peak nicht einmal zum nächsten Kanal. Nur die Beträge der Fourierkomponenten des Peaks und seiner Nachbarn variieren gerade so, dass eine wie oben beschriebene Interpolation die neue Ortsfrequenz auffinden kann. Zugleich erscheint das Spektrogramm aber invertiert, weil der zusätzliche Gangunterschied von Referenz- und Messlicht um 2$\Delta$nd ≈ $\lambda$/2 Auslöschung und Verstärkung für alle benutzten Wellenlängen näherungsweise vertauscht. In der bisherigen Auswertung blieb die Phase des Signals trotz ihrer offensichtlichen Sensitivität noch unberücksichtigt.

Die absolute Phase $\varphi_0$ aus Gleichung (1) lässt sich nicht bestimmen. Die einzige Phaseninformation, die man aus den Messdaten gewinnen kann, ist die Phasenlage der Intensitätsverteilung $I_W(\nu)$ bezogen auf eine gewählte Wellenzahl aus dem zur Verfügung stehenden Wellenzahlbereich (hier: 1163-1250 $mm^{-1}$). Gängige FFT-Routinen geben die Phase normalerweise aus, wobei man sich vergewissern muss, welcher Bezugspunkt für die Phasenangabe gewählt worden ist.

Im Prinzip wird man zunächst eine komplexe FFT durchführen, so dass alle Komponenten $c_j$ der Fourierreihe komplexe Zahlen der Form $c_j = \rho_j \exp(i \varphi_j)$ sind. Es ist dann eine zu bevorzugende Variante, die Phase aus der dem Betrage nach größten Fourierkomponenten ($\rho_j$ = max für Kanal j=P) zu bestimmen. Wegen $C_P = C_P + i S_P$ erhält man sofort $\varphi_p = \arctan(S_P/C_P)$ mit der Einschränkung -$\pi$/2 < $\varphi_P$ < $\pi$/2. Falls die Hüllkurve des Spektrums nicht symmetrisch ist, so ist es besser die Phase durch Interpolation an dem vorher bestimmten Maximum des Spektrums zu bestimmen.

Aber bei einer einzelnen Abstandsmessung an einem Punkt der Probe kann aus der zusätzlichen Bestimmung der Phase keine zusätzliche Abstandsinformation gewonnen werden. Man muss sich vielmehr die Änderung der Phase beim Übergang zu einem anderen Messpunkt ansehen, um genaue Daten über die Differenz des Ebenenabstands zwischen den beiden Messpunkten zu erhalten.

An einem ersten Messpunkt (Startpunkt, S) bestimmt man den optischen Abstand der Ebenen $nd_S$ und die Phase $\varphi_S$ und an einem beliebigen zweiten Messpunkt (M) in derselben Weise $nd_M$ und $\varphi_M$. Man bildet Differenzen $\Delta$nd := $nd_M$ - nds und $\Delta\varphi$ := $\varphi_M$ - $\varphi_S$. Dabei ist $\Delta\varphi$ zunächst nur bis auf Vielfache von 2$\pi$ bestimmt und es gilt -$\pi$ ≤ $\Delta\varphi$ ≤ $\pi$. Die wahre Phasendifferenz lautet aber $\Delta\varphi^*$ := $\Delta\varphi$ + N 2$\pi$ mit zunächst unbekannter ganzer Zahl N. Diese Zahl ist jedoch in der unabhängig von der Phase bestimmten Größe $\Delta$nd enthalten und kann extrahiert werden.

$\Delta\varphi^*$ ändert sich mit der Ortsfrequenz 2nd der Intensitätsverteilung infolge einer nichtkonformen Verschiebung aller Extrema, d.h. $\Delta\varphi^*$ = $\Delta\varphi^*(\nu)$. Allerdings ist die Abhängigkeit von der Wellenzahl nur schwach und kann für eine kleine Änderung des optischen Ebenenabstandes (Größenordnung $\Delta$nd ≈ $\lambda$) vernachlässigt werden. Wenn sich der Ebenenabstand aber z.B. um den halben Kanalabstand der Fouriertransformierten (ca. 6 $\mu$m) ändert, tritt eine zusätzliche Oszillation auf, d.h. $\Delta\varphi^*$ variiert um bis zu 2$\pi$, je nachdem, welche Wellenzahl aus dem hier benutzten Intervall als Bezugsstelle gewählt worden ist. Es ist deshalb wesentlich, die Phase bei jedem Messpunkt (M) in derselben Weise zu bestimmen wie am Startpunkt (S) der Messung. Berechnet man die Phase am Startpunkt alternativ direkt an der gewählten Wellenzahl 1/$\lambda_M$ z.B. am globalen Maximum, so sind die Phasen anderer Messpunkte ebenfalls auf 1/$\lambda_M$ zu beziehen.

Jede Änderung des Ebenenabstands um $\Delta$nd = $\pm$ $\lambda_M$ /4 führt nun zu einer messbaren Phasendifferenz $\Delta\varphi^*$ = $\pm\pi$ (Invertierung des Spektrogramms). Folglich gilt für beliebige Abstandsänderungen $\Delta$nd

$$(3) \quad \frac{\Delta nd}{\lambda_M/2} - \frac{\Delta\varphi^*}{2\pi} = \frac{\Delta nd}{\lambda_M/2} - \frac{\Delta\varphi}{2\pi} - N = 0 \;,$$

so dass die bereits in der Definition von $\Delta\varphi^*$ gesuchte Anzahl N ganzer Zyklen unmittelbar anhand der gemessenen Werte $\Delta nd$ und $\Delta\varphi$ abgelesen werden kann. Da diese Messwerte verrauscht sind, werden sich für den Ausdruck

$$(4) \quad N = \frac{\Delta nd}{\lambda_M/2} - \frac{\Delta\varphi}{2\pi}$$

zuerst nur näherungsweise ganze Zahlen ergeben, die durch einen Auswertealgorithmus auf Ganzzahlen zu runden sind (Integer-Forderung). Die Genauigkeit der Bestimmung von $\Delta nd$ muss hierfür ausreichend hoch sein. Um dies in einer Messreihe zu überprüfen, kann man die absolute Abweichung von (4) von einer Ganzzahl betrachten. Diese sollte für keine Messung größer als ¼ sein, um die Richtigkeit der Zuordnung gewährleisten zu können. Da zwei Messungen in die Bestimmung von $\Delta nd$ eingehen, sollte der Fehler jeder Einzelmessung deutlich kleiner als $\lambda_M/8$ sein. Dies sollte nicht nur für den mittleren Fehler (RMS) gelten, sondern für nahezu jeden Wert. Dementsprechend sollte auch die dreifache Standardabweichung des Fehlers deutlich kleiner als $\lambda_M/8$ sein. Für eine Wellenlänge von 830 nm bedeutet dies eine gewünschte Genauigkeit in der ersten Bestimmung von nd in der Größenordnung von 50 nm. Mit der obigen Abschätzung des Fehlers auf 6 nm ist man damit auf der sicheren Seite.

Mit (4) und erzwungen ganzzahligem N ergibt sich unmittelbar für jeden Messpunkt ein Messwert $\Delta\varphi^* := \Delta\varphi + N\,2\pi$ und eine verbesserte Schätzung für den optischen Ebenenabstand

$$(5) \quad \Delta nd^* := \frac{\Delta\varphi^*}{2\pi} \cdot \frac{\lambda_M}{2}$$

Auf die konkrete Wahl des $\lambda_M$ kommt es dabei nicht an. $\Delta nd^*$ wird für jede Wahl von $\lambda_M$ in der Nähe des gemessenen $\Delta nd$ liegen. Als eine mögliche Ausgestaltung des Verfahrens erlaubt dies sogar, $\lambda_M$ als Fitparameter in einem Processing nach dem Abschluss eines Probenscans zu benutzen. Man zeichnet dafür alle Daten einer Messreihe in einer Auswerteeinheit auf und sucht dann z.B. mit einem gängigen Minimierungsalgorithmus nach einem optimalen $\lambda_M$ aus dem benutzten Spektrum, für das der Ausdruck (4) beim Einsetzen jedes Messwert-Paares ($\Delta nd$, $\Delta\varphi$) nur innerhalb enger Grenzen von einer ganzen Zahl abweicht. Anders gesagt sucht man das $\lambda_M$, für das die Integer-Forderung von vornherein am besten erfüllt ist bzw. die Rundung den geringsten Eingriff darstellt.

Die erreichbare Verbesserung der Abstandsbestimmung durch die Ein-Schritt-Iteration (5) mit Integer-Forderung (4) wird durch nun verdeutlicht. In einer numerischen Modellierung werden Abstandsänderungen $\Delta nd_{SET}$ zwischen 0 und 2,7 $\lambda_M/2$ vorgegeben. Phase und Ortsfrequenz des Signals werden berechnet und mit Rauschen versehen. Aufgetragen gegen das vorgegebene $\Delta nd_{SET}$ (x-Achse) sind die verrauschten Messdaten $\Delta nd$ [Einheit: $\lambda_M/2$] und $\Delta\varphi$ [Einheit: $2\pi$], die aus diesen bestimmte Ganzzahl N und das nach (5) berechnete Ergebnis $\Delta nd^*$ [Einheit: $\lambda_M/2$]. Man erkennt beispielsweise, wie bei ca. 2,5 $\lambda_M/2$ eine durch Rauschen bedingte Fehlmessung von $\Delta nd$ und $\Delta\varphi$ zu einem sprunghaften Wechsel der Ganzzahl führt und so den Fehler in $\Delta nd^*$ kompensiert.

Abschließend soll noch wie vorher eine Abschätzung der Reproduzierbarkeit des Verfahrens erfolgen. Die einzige Unsich fachte Betrachtung sei die Phase $\varphi_S$ am Startpunkt einer Messreihe betrachtet, von der als wahrer Wert $\varphi_S = 0$ angenommen werden soll. Die Koeffizienten der Cosinus- und Sinus-Reihe $C_i$ und $S_i$ nach der Fouriertransformation sollten dann alle außerhalb des Peaks um etwa den Faktor des Signal-Rausch-Verhältnisses kleiner sein als der Koeffizient des Cosinus-Terms der Spektralkomponente des Peaks $C_P$. Der Koeffizient des entsprechenden Sinus-Terms $S_P$ wird in der Regel auch nicht verschwinden, sondern eine Größe wie die übrigen Koeffizienten haben. Die Bestimmung der gemessenen Phase $\varphi_S$ erfolgt durch Bildung von $\varphi_S = \arctan(S_P/C_P)$. Das Ergebnis wird ein kleiner Wert sein, somit kann für den arctan eine lineare Näherung verwendet werden ($x \approx \arctan(x)$). Dies bedeutet, dass die Phase $\varphi_S$ eine Standardabweichung von ca. 1 / (S/N) besitzt. Aus (5) folgt dann sofort, dass der Fehler von $\Delta nd^*$ in der Größenordnung von $\lambda_M / 4\pi$(S/N) liegt. Mit den bisherigen Zahlenbeispielen ergibt sich ein Wert von unter 0.1 nm, also etwa der Durchmesser eines Atoms. Auf dieser Skala machen sich kleinste Veränderungen, wie Temperatur und Erschütterungen, sofort bemerkbar, so dass hier sehr schnell auch andere Einflussfaktoren die experimentellen Ergebnisse beeinflussen.

Die hier beschriebene Methode hat im Vergleich zu den etablierten Verfahren den Vorteil, dass sie technisch vergleichsweise einfach und daher kostengünstig ist.

Der einzige Nachteil der Methode kann darin gesehen werden, dass die Beschaffenheit von Materialoberflächen einen Einfluss auf die Phasenlage der reflektierten Welle hat. Dieser Effekt kann mit dem Verfahren von einer echten Abstandsänderung nicht unterschieden werden. Gerade wenn es um die Messung von molekularen Schichten auf speziellen Substraten, z.B. Bio-Chips, geht, ist der Phasensprungeffekt vermutlich sogar dominant. Dies kann den Nachweis einer dünnen Schicht aber auch vereinfachen, da ihre Anwesenheit sozusagen "überbetont" wird. Soweit man also weniger an der genauen Schichtdicke als an ihrer großflächigen Präsenz interessiert ist, lässt sich diese nun in einfacher Weise besonders deutlich ausmachen.

Das vorgestellte Verfahren stützt sich nicht auf spezielle Eigenschaften der untersuchten Materialien und ist so für ein breites Spektrum von Proben geeignet. Es funktioniert zerstörungsfrei und kontaktlos, wobei die Anordnung der Messvorrichtung gegenüber der Probe in großer Variabilität erfolgen kann (Bsp.: Messung in einer Vakuumkammer von außen durch ein Fenster).

**Patentansprüche**

1. Verfahren zur interferometrischen Bestimmung der Änderung des optischen Abstandes zweier Ebenen in einer Probe bei dem Übergang von einem ersten zu einem zweiten Messpunkt auf der Probe, wobei die Probe mit Licht großer Bandbreite beleuchtet wird und die Probe mindestens für das Licht teildurchlässig und die Ebenen teilreflektierend ausgebildet sind, **gekennzeichnet durch**

   - Spektralzerlegung der Überlagerung der an den Ebenen reflektierten Lichtstrahlen für beide Messpunkte,
   - Bestimmung der jeweiligen Modulationsfrequenzen und Phasenlagen der Spektrogramme und Differenzenbildung dieser Ergebnisse,
   - Rückschließen auf einen ersten Wert für die optische Abstandsänderung der Ebenen aus der Differenz der Modulationsfrequenzen allein und
   - Berechnen eines zweiten, genaueren Wertes für die optische Abstandsänderung aus dem ersten Wert unter Berücksichtigung der Phasendifferenz.

2. Verfahren nach Anspruch 1, **dadurch gekennzeichnet, dass** als Referenzebene eine Probenoberfläche gewählt ist.

3. Verfahren nach einem der vorangehenden Ansprüche, **dadurch gekennzeichnet, dass** eine Referenzebene hoch reflektierend ausgebildet ist.

4. Verfahren nach einem der vorangehenden Ansprüche, **dadurch gekennzeichnet, dass** an einer Mehrzahl von Messpunkten jeweils die Modulationsfrequenz und die Phasenlage des Spektrogramms bestimmt werden, wonach die Differenzenbildung dieser Werte mit den Messwerten desselben fest gewählten Messpunktes, insbesondere des ersten Messpunktes, erfolgt.

5. Verfahren nach Anspruch 4, **dadurch gekennzeichnet, dass** die an der Mehrzahl der Messpunkte gemessenen Spektrogramme elektronisch gespeichert werden und eine rechnergestützte Auswertung zur Bestimmung eines optimalen, d.h. minimal verrauschten, optischen Ebenenabstands an allen Messpunkten nach Ende der Messung erfolgt, bei der Parameter algorithmisch variiert werden, insbesondere die Bezugswellenlänge zur Phasenbestimmung oder die Wahl des Referenzmesspunktes für die Differenzenbildung.

**Claims**

1. Method for the interferometric determination of the change to the optical separation between two planes in a sample at the transition from a first to a second measurement point on the sample, the sample being illuminated with high band width light and the sample is at least partly transmitting for the light and the planes are constructed in a partly reflecting manner, **characterized by**

- spectral dispersion of the superposition of the light beams reflected at the planes for both measurement points,
- determination of the modulation frequencies and phase positions of the spectrograms and differentiation of these results,
- concluding a first value for the optical separation change of the planes from the difference of the modulation frequencies only and
- calculation of a second, more precise value for the optical spacing change from the first value, whilst taking account of the phase difference.

2. Method according to claim 1, **characterized in that** a sample surface is chosen as the reference plane.

3. Method according to one of the preceding claims, **characterized in that** the reference plane is highly reflecting.

4. Method according to one of the preceding claims, **characterized in that** at a plurality of measurement points in each case the modulation frequency and phase position of the spectrogram are determined, followed by the differentiation of these values with respect to the measured values of the same fixed selected measurement point, particularly the first measurement point.

5. Method according to claim 4, **characterized in that** the spectrograms measured at the plurality of measurement points are electronically stored and there is a computer-assisted evaluation for the determination of an optimum, i.e. minimum noisy, optical plane separation at all the measurement points following the end of the measurement, in which parameters are algorithmically varied and in particular the reference wavelength for phase determination or the choice of the reference measurement point for differentiation.

## Revendications

1. Procédé de détermination par interférométrie de la modification de la distance optique entre deux plans dans un échantillon lors du passage d'un premier point de mesure à un deuxième sur l'échantillon, l'échantillon étant éclairé par une lumière de grande largeur de bande et l'échantillon étant semi-transparent au moins à la lumière et les plans semi-réfléchissants, **caractérisé par**

- décomposition spectrale de la superposition des rayons lumineux réfléchis sur les plans pour les deux points de mesure,
- détermination des fréquences de modulation et positions de phase respectives des spectrogrammes et formation de la différence de ces résultats,
- déduction d'une première valeur de modification de la distance optique des plans à partir de la différence des fréquences de modulation seules et
- calcul d'une deuxième valeur, plus précise, de modification de la distance optique à partir de la première valeur en tenant compte de la différence de phase.

2. Procédé selon la revendication 1, **caractérisé par le fait que** l'on choisit une surface de l'échantillon comme plan de référence.

3. Procédé selon l'une des revendications précédentes, **caractérisé par le fait qu'**un plan de référence est hautement réfléchissant.

4. Procédé selon l'une des revendications précédentes, **caractérisé par le fait que** l'on détermine à une pluralité de points de mesure chaque fois la fréquence de modulation et la position de phase du spectrogramme, après quoi on forme la différence de ces valeurs avec les valeurs de mesure du même point de mesure choisi fixe, en particulier du premier point de mesure.

5. Procédé selon l'une des revendications précédentes, **caractérisé par le fait que** les spectrogrammes mesurés à la pluralité de points de mesure sont mémorisés électroniquement et que l'on réalise une évaluation assistée par ordinateur en vue de déterminer une distance optique entre plans optimale, c.-à-d, la moins bruitée, à tous les points de mesure à la fin de la mesure, lors de laquelle on fait varier des paramètres par algorithme, en particulier la longueur d'onde de référence pour la détermination de phase ou le choix du point de mesure de référence pour la formation de la différence.